# EUROPÄISCHE PATENTSCHRIFT

(11) **EP 0 475 047 B1**
(45) Veröffentlichungstag und Bekanntmachung des Hinweises auf die Patenterteilung: **30.08.1995**
(21) Anmeldenummer: 91112647.2
(22) Anmeldetag: 27.07.1991
(51) Int. Cl.: C03B 23/09, C03B 23/11

(54) **Vorrichtung und Verfahren zum Verformen des wärmeerweichten Endes eines Glasrohres und Verwendung der Vorrichtung in einer Fläschchenmaschine**
Apparatus and method for transforming the heated end of a glass tube and application of the said apparatus in a machine for making small bottles
Appareil et procédé pour transformer le bout chauffé d'un tube en verre et application dudit appareil dans une machine pour fabriquer des petites bouteilles

(30) Priorität: 11.09.1990 DE 4028824
(43) Veröffentlichungstag der Anmeldung: 18.03.1992
(73) Patentinhaber: Schott Glaswerke, 55122 Mainz (DE); Carl-Zeiss-Stiftung trading as SCHOTT GLASWERKE, 55122 Mainz (DE)
(72) Erfinder: Männl, Reinhard, W-8596 Mitterteich (DE); Wolfrum, Alfons, W-8593 Tirschenreuth (DE); Neumeier, Franz, W-8594 Arzberg (DE)
(74) Vertreter: Fuchs Mehler Weiss

(56) Entgegenhaltungen:
- DE-A- 3 405 291
- DE-B- 1 093 519

## Beschreibung

Die Erfindung betrifft eine Vorrichtung zum Verformen des Endbereiches eines Glasrohres zur Ausbildung eines Mündungsbereiches eines Fläschchens nach dem Oberbegriff des Anspruches 1, ein Verfahren zum Formen eines Fläschchens und die Verwendung der Vorrichtung in einer Fläschchenmaschine.

Vorrichtungen zur Herstellung von Hohlkörpern wie Fläschchen, Ampullen etc. aus Glasrohr sind vielfach bekannt. Da diese Artikel in Massenfertigung hergestellt werden, soll eine preiswerte und schnelle Fertigung gewährleistet sein.

Die DE-PS 12 61 638 beschreibt eine bekannte Vorrichtung dieser Art, bei der ein Kranz von Aufnahmevorrichtungen Werkstücke in Form von Glasrohren in einer Werkstückbahn an mindestens einer Bearbeitungsstation vorbeidreht. Die Bearbeitungsstation enthält schwenkbare Auslegerarme, die Formgebungsteile tragen. Die Formgebungsteile werden in die Werkstückbahn hineingeschwenkt und können die Werkstücke auf einem Teilstück der Werkstückbahn formen, wobei das Teilstück durch die Größe und Anordnung der Auslegerarme stark beschränkt ist. Um die für einen Formgebungsvorgang nötige Zeit zur Verfügung zu haben, muß der Kranz mit den Werkstücken entweder während der Formung angehalten werden, oder darf sich nur sehr langsam drehen, oder der Formgebungsvorgang wird in mehrere Einzelformgebungsvorgänge unterteilt, wodurch wiederum eine Vielzahl von Bearbeitungsstationen für die Bearbeitung der gleichen Stelle am Fläschchen notwendig wird. Der Auslegerarm muß bei dieser Vorrichtung nach der Formung schnell in die Ausgangsposition zurückgeschwenkt werden, um mehr Zeit für die Formung zur Verfügung zu haben. Dies führt zu erhöhter mechanischer Beanspruchung und entsprechend zu erhöhtem Verschleiß.

Um das Teilstück, auf dem die Formgebung erfolgt, zu vergrößern, hat man in einer aus der DE-PS 15 96 410 bekannten Vorrichtung die Formgebungsrollen auf eine Transportvorrichtung gesetzt, die für die Dauer der Formung mit der Winkelgeschwindigkeit des Kranzes mit den Werkstücken und parallel zu den Werkstücken mitfährt, so daß das zu formende Werkstück bzgl. der Transportvorrichtung stationär ist. Um während der Rückführung der Transportvorrichtung das nachfolgende Werkstück zu formen, müssen mehrere Transportvorrichtungen mit Formgebungsrollen eingesetzt werden, wobei die Transportvorrichtung z.B. über eine Kette miteinander verbunden sein können, so daß, während die erste Transportvorrichtung zurückfährt, eine weitere Transportvorrichtung zur Formgebung neben dem nachfolgenden Werkstück herfährt. Jede Transportvorrichtung hat hierdurch eine Bearbeitungspause von mindestens 100% der Formungszeit eines Fläschchens. Durch Toleranzen der einzelnen Transportvorrichtungen und der Formgebungsrollen entstehen entsprechend der Zahl von Transportvorrichtungen bei dieser Vorrichtung etwas voneinander abweichende Fläschchentypen.

Der Erfindung liegt die Aufgabe zugrunde, eine Vorrichtung zur Herstellung von Hohlkörpern aus Glasrohren zu schaffen, wobei keine oder nur kurze Bearbeitungspausen auftreten sollen und eine hohe Herstellungsgeschwindigkeit möglich sein soll. Dabei soll der mechanische Aufwand für die Bearbeitungsstation möglichst gering sein, um geringe Toleranzen bei den gefertigten Fläschchen zu erhalten. Außerdem soll, unter Verwendung der Vorrichtung, eine Fläschchenmaschine Glasrohre mit verschiedenen Wandstärken oder Außendurchmessern verarbeiten können, ohne daß dadurch langwierige Umbauarbeiten oder Einstellungsarbeiten notwendig werden. Aufgabe der Erfindung ist auch ein Verfahren zur Herstellung eines Fläschchens.

Diese Aufgabe wird bei einer gattungsgemäßen Vorrichtung gemäß dem kennzeichnenden Teil des Anspruches 1 gelöst.

Im Gegensatz zu dem Erfahrungsstand nach dem Stand der Technik ermöglicht die Erfindung eine Massenherstellung von einheitlichen Fläschchen ohne hohe mechanische Beanspruchung der Formgebungsteile. Fläschchen steht im folgenden für alle aus einem Rohr herstellbare Hohlkörper, wie z.B. Rollrandfläschchen, Schnappdeckelgläser, Ampullen etc. Es hat sich gezeigt, daß mittels der Formrolle, die relativ zu dem vorbeifahrenden Glasrohr vor- und zurückschiebbar ist und während der Formgebung einfach durch eine Vor- und Zurückbewegung dem Glasrohr unter Einrollung desselben ausweicht, die Leerlaufzeiten der Formgebungsteile minimiert und sogar völlig vermieden werden können, da sich die Formrolle gegen Ende des Einrollens in der Startposition für die Formgebung des nachfolgenden Glasrohres befindet. Dies ermöglich ein kontinuierliches Drehen des Karussells mit beträchtlicher Drehzahl und damit eine kontinuierliche Massenherstellung der Hohlkörper mit hoher Herstellungsgeschwindigkeit.

Ein besonderer Vorteil der Erfindung besteht darin, daß die Vor- und Zurückbewegung der Formrolle mit geringem Aufwand mittels eines Feinantriebes und einer programmierbaren Steuereinrichtung gesteuert werden kann, so daß sich die Formgebungsparameter leicht verändern und anderen Bedingungen, wie z.B. anderen Glasrohrdurchmessern, anpassen lassen. Das Verschieben der Formrolle erfolgt auf einer Geraden, so daß der mechanische Aufwand besonders gering ist.

Mit der Vorrichtung können Hohlkörper wie z.B. Fläschchen, Ampullen, Kerzenlampen etc. aus Glasrohren geformt werden, die in rotierbaren Haltefuttern auf einer Ablaufbahn, insbesondere in einem Karussell, an der erfindungsgemäßen Vorrichtung vorbeifahrbar sind.

Vorzugsweise ist die Achse der Formrolle zu der Glasrohrachse im wesentlichen parallel, so daß während der Formgebung die Formrolle immer in gleicher Höhe an dem zu verformenden Teil des Glasrohres ansetzt. Sollte jedoch eine Verschiebung der Glasmasse während der Formgebung erwünscht sein, so kann die Formrolle auch leicht schräg gegen das Glasrohr angesetzt werden.

Die Formrolleneinrichtung ist vorteilhafterweise in bezug auf die Ablaufbahn der Haltefutter stationär angeordnet und dabei in eine Richtung im wesentlichen quer zur Richtung der Ablaufbahn der Haltefutter beweglich, wobei vorzugsweise eine Phasenverschiebung zwischen der periodischen Hin- und Herbewegung der Formrolle und der periodischen Folge der vorbeibewegten Haltefutter eingestellt wird. Hierdurch ist die Änderung des Abstandes des einer Futterachse nächsten Punktes des Formrollenumfanges von dieser Futterachse während der relativen Bogenbewegung der Formrolle um die Futterachse möglich bei gleichzeitiger bis zu 100%iger Ausnutzung der Dauer einer periodischen Folge als Formzeit.

Auch ein schräges Anstellen der Hin- und Herbewegung der Formrolleneinrichtung zur Richtung der Ablaufbahn der Haltefutter hin ist möglich, wobei dann unter einem bestimmten Winkel, der insbesondere von dem Formgebungsgrad und dem Durchmesser der Glasrohre abhängig ist, keine Phasenverschiebung zwischen der periodischen Hin- und Herbewegung der Formrolle und der periodischen Folge der vorbeibewegten Haltefutter notwendig ist. Die schräge Anstellung ist besonders bei einer kreisförmigen Ablaufbahn der Haltefutter vorteilhaft, wobei dann die schräge Anstellung einfach durch eine horizontale Versetzung der Gleitschiene der Formrolle aus einer Radialen der Kreisbahn in Richtung der Ablaufbahn erreicht werden kann. Das Maß der Versetzung bestimmt sich dabei aus den Abmessungen der Fläschchenmaschine und der Fläschchen, wie den Radien des Karussells, des Glasrohres, der Formrolle, der geformten Mündung sowie dem Drehwinkel des Karussells, über den die Formung erfolgt. Vorzugsweise weicht die schräge Anstellung nur wenige Grade von der senkrechten (quer) Anstellung ab, wobei sich Anstellwinkel von 80° - 90°, vorteilhafterweise 85° - 90°, als günstig für den Formprozeß ergeben haben. Der geeignetste Anstellwinkel ist, wie oben beschrieben, 90°.

Vorteilhafterweise sind die Haltefutter an einem mit stetiger Drehbewegung antreibbaren Drehtisch angeordnet, so daß diese eine Kreisbahn beschreiben, wobei die Rohrachsen vorzugsweise parallel und im gleichen Teilungsabstand zueinander auf einem Zylindermantel liegen. Bei dieser Anordnung sind die einzelnen Arbeitschritte, wie Einbringen der Glasrohre in die Maschine, die einzelnen Bearbeitungsschritte sowie die weitere Bearbeitung des Fläschchens nach der Formung der Mündung in einer einzigen, kompakten Fläschchenmaschine möglich.

Vorzugsweise hat die Formrolleneinrichtung nur eine einzige Formrolle, deren Rand vorteilhafterweise ein die Außenseite des Mündungsabschnittes formendes Profil aufweist. Ein solches Profil ist auch mit z.B. zwei übereinander liegenden Formrollen möglich, die bzgl. der Drehachse des Glasrohres in unterschiedlichen Abständen auf dem Glasrohr abrollen.

Vorteilhafterweise wird die Formrolle im Inneren des Glasrohrendes von einem solchen Formfinger unterstützt, der einen kleineren Querschnitt als der angestrebte Innenquerschnitt des zu formenden Glasrohrendes aufweist und mit einem Kreisbogensegment versehen ist, welches sich vorteilhaft über mindestens denjenigen Umfangswinkel erstreckt, über den die Formrolle im Eingriff mit dem Glasrohr abrollt, wobei der Radius des Kreisbogensegmentes günstigerweise gleich dem Radius des angestrebten Innenquerschnittes ist. Ein solcher Formfinger ist nicht über seinen gesamten Umfang in Kontakt mit dem wärmeerweichten Glas und kann somit einfacher aus der fertig geformten Mündung wieder herausgeführt werden.

Zur Vermeidung einer Leerlaufzeit während des Wechsels der Formrolle zwischen zwei aufeinanderfolgenden Haltefuttern wird der Durchmesser der Formrolle so gewählt, daß er größer ist als der Teilungsabstand zwischen den Haltefuttern, vermindert um den minimal verarbeitbaren Glasrohrradius plus vermindert um den minimalen Mündungsradius. Hierdurch ist bei allen verwendbaren Glasrohr- und Mündungsdurchmessern immer eine pausenlose Formung möglich. Vorteilhafterweise wird ein Durchmesser der Formrolle gewählt, der 30% bis 100% größer ist als der Teilungsabstand zwischen den Haltefuttern, vermindert um den minimal verarbeitbaren Glasrohrradius und vermindert um den minimalen Mündungsradius, wodurch sich eine günstige Charakteristik der Hin- und Herbewegung der Formrolle bei praktisch allen verwendbaren Glasrohrdurchmessern ergibt.

Die Formrolle auf dem stationären Support läßt sich präzise auf einem Schlitten hin- und herbewegen, welcher mit einem Servomotor über eine Leitachsbahnsteuerung synchron zur periodischen Folge der vorbeibewegten Haltefutter verschiebbar ist. Diese Anordnung hat sich bei der gebotenen Präzision der beschriebenen Formgebung als besonders günstig erwiesen.

Vorteilhaft ist auch eine Anfederung der Formrolle, z.B. auf dem Schlitten oder des gesamten Schlittens, so daß die Formrolle relativ zur theoretischen Bewegung elastisch gegen das zu verformende Glasrohrende wirkt. Durch diese Maßnahme wird eine Zerstörung oder übermäßige Belastung von mechanischen Teilen vermieden, wenn z.B. ein harter, nicht verformbarer Gegenstand, wie z.B. ein Glassplitter, die Formgebung der Formrolle stört. Je nach Härte eines solchen störenden Gegenstandes könnte die Genauigkeit der erfindungsgemäßen Vorrichtung durch Zerstörung oder Beschädigung bestimmter mechanischer Komponenten, wie z.B. der Aufhängung der Formrolle oder des Formfingers, nachlassen, die Anfederung dient hier als Sicherheitselement.

Die Anfederung ermöglicht außerdem auch die Verarbeitung von unterschiedlichen Glasmassen (bedingt durch unterschiedliche Glasrohrqualitäten) im Mündungsbereich, wodurch eine z.B. vergrößerte Glasmasse gleichmäßig über den Mündungsbereich so verteilt wird, daß ein etwas größerer, aber dennoch kreisrunder Außendurchmesser entsteht. Um dies zu erreichen, wird zweckmäßigerweise der Mündungsbereich unter Anfederung geformt, wobei die Feder während der Formgebung nicht an einem Anschlag ist.

Die Erfindung bezieht sich auch auf die Verwendung der obigen Vorrichtung gemäß Anspruch 14.

Bei dem Verfahren zum Formen eines Fläschchens aus einem Glasrohr, bei dem aus dem einem Ende des Glasrohres das Fläschchen geformt wird und das die Schritte
Transportieren eine Anzahl von Glasrohren in gleichen Teilungsabständen kontinuierlich entlang einer Ablaufbahn,
Erwärmen des eines Endes jedes Glasrohres,
Formen einer Mündung durch Einrollen des wärmeerweichten Glasrohrendes mit einer Formrolle gegen einen Formstachel, wobei das Glasrohr um seine Längsachse rotiert,
Abtrennen des Glasrohrabschnittes mit der geformten Mündung vom Glasrohr, und
Formen eines Fläschchenbodens in den abgetrennten Glasrohrabschnitt
aufweist, wird die Aufgabe dadurch gelöst, daß die Formrolle relativ zu der Ablaufbahn hin und herbewegt wird mit der Periodizität der vorbeibewegten Glasrohre, daß die Formrolle unter Verkleinerung des Abstandes ihres einer vorbeibewegten Glasrohrlängsachse nächstliegenden Umfangpunktes zu dieser Längsachse relativ zu dieser bogenförmig um diese herum bewegt wird, und daß die Formrolle dabei bei Annäherung eines Glasrohres von der Ablaufbahn der Glasrohre zurückbewegt wird und bei sich entfernenden Glasrohr wieder gegen die Ablaufbahn in den Abstandraum zwischem dem sich entfernenden und den nachfolgenden Glasrohr vorbewegt wird.

Im folgenden werden die Erfindung und die damit erzielbaren Vorteile anhand eines Ausführungsbeispiels, einer Maschine zur kontinuierlichen Herstellung von Fläschchen aus Glas (Fläschchenmaschine) in Verbindung mit den Zeichnungen näher beschrieben.
- Figur 1: zeigt einen Schnitt durch die Fläschchenmaschine entlang der Karussellachse;
- Figur 2: zeigt eine Formrolleneinrichtung in einer vergrößerten Darstellung;
- Figur 3: zeigt schematisch einzelne Formgebungsschritte in einer oberen Ebene des Karussells;
- Figur 4: zeigt schematisch einzelne Formgebungsschritte in einer unteren Ebene des Karussells; und
- Figur 5: zeigt schematisch die Bewegung der Formrolle in Draufsicht.

Bei der Formung eines Fläschchens aus einem Glasrohr werden alle Bearbeitungsschritte in einer Fläschchenmaschine 1 durchgeführt, die eine obere Ebene 4 und eine untere Ebene 13 aufweist. Die Ebenen 4 und 13 sind fest miteinander verbunden und bilden ein zweistöckiges Karussell 2, das über Lager 80 auf einem Gestell 3 gelagert ist. Am Umfang der oberen Ebene 4 sind in regelmäßigen Teilungsabständen um ihre eigenen Längsachsen drehbare erste Aufnahmevorrichtungen 5 befestigt, deren untere Enden je ein mittels eines pneumatischen Zylinders 6 öffen- und schließbares Haltefutter 7 aufweisen. In dem dargestellten bevorzugten Ausführungsbeispiel hat die Ebene 4 einen Durchmesser von ca. 80 cm (gemessen von den Längsachsen AL zweier einander gegenüberliegender Aufnahmevorrichtungen 5) und trägt 16 Aufnahmevorrichtungen 5. Der Durchmesser der Ebene 4 liegt bevorzugt bei 60 cm bis 120 cm, wobei der Abstand zweier benachbarter Aufnahmevorrichtungen 5 günstigerweise von 11 cm bis 23 cm beträgt.

Zum Öffnen des Haltefutters 7 zieht der pneumatische Zylinder 6 eine Gabel 8 mit zwei Rollen 8a, die in einer umlaufenden Nut 81 einer Schiebehülse 9 laufen, gegen eine Feder 10, wodurch die Schiebehülse 9 Spannbacken 11 zurückzieht und ein Glasrohr 12 freigibt. Statt pneumatischer sind auch z.B. elektromagnetische und rein mechanische, über Kurven gesteuerte Federkraftsteuerungen möglich. Maßgebend ist, daß die Haltefutter weich schließen, um das Glasrohr nicht zu zerstören. Prinzipiell sind auch andere Arten geeigneter Futter zum Halten der Rohre geeignet.

Zur Verarbeitung in der Fläschchenmaschine 1 sind Glasrohre 12 mit einem Außendurchmesser von 13 mm bis 50 mm und mit einer Wandstärke von 0,5 mm bis 3,0 mm besonders geeignet.

Die Längsachsen AL der ersten Aufnahmevorrichtungen 5 verlaufen bei der dargestellten Ausführungsform zur Vereinfachung des Aufbaues parallel zur Karusselldrehachse KD. Unterhalb jeder ersten Aufnahmevorrichtung 5 ist in der unteren Ebene 13 des Karussells 2 jeweils eine um ihre eigene Längsachse drehbare zweite Aufnahmevorrichtung 14 mit ebenfalls einem Haltefutter 15 so angeordnet, daß gegenüberliegende erste und zweite Aufnahmevorrichtungen bzw. deren Haltefutter jeweils eine gemeinsame Längsachse aufweisen. Die Haltefutter 15 der zweiten Aufnahmevorrichtungen 14 sind über eine (nicht dargestellte) Kurve steuerbar, die von oben auf einen Zylinder 16 und über eine Gabel mit zwei Rollen 86, die in einer Nut 85 einer Schiebehülse 83 geführt sind, wirkt und hierdurch, wie oben beschrieben, gegen einen Federdruck 82 Spannfutter 84 des Haltefutters 15 öffnet. Auch bei dem Haltefutter 15 ist eine pneumatische oder elektromagnetische Betätigung möglich, maßgebend ist auch hier, daß das Haltefutter weich schließt, um das von diesem Backenfutter gehaltene Glasrohrende bzw. Fläschchen nicht zu zerstören.

Ein steuerbarer Motor 17 mit Inkrementalgeber dreht das Karussell 2 mit den Aufnahmevorrichtungen 5 und 14 über ein Zahnradpaar 18. Zur Rotation der Aufnahmevorrichtungen 5 und 14 um ihre eigenen Drehachsen AL ist ein unabhängig von dem Motor 17 steuerbarer zweiter Motor 19 vorgesehen, der über ein Zahnradpaar 20 (oder einen nicht dargestellten Zahnriementrieb), ein Rohr 21 und ein Zahnradpaar 22 (oder direkt mit einer (nicht dargestellten) Kette über ein Kettenrad 22a) auf eine Welle 23 wirkt, die an ihrem oberen und unteren Ende Kettenräder 24 und 25 aufweist, über die die Aufnahmevorrichtungen 5 und 14 mit Kettenrädern 26 und 27 mittels nicht dargestellter Ketten gleichsinnig und mit gleichem Übersetzungsverhältnis angetrieben werden, so daß die oberen und unteren Aufnahmevorrichtungen 5 und 14 mit gleicher Drehzahl rotieren.

Um ein Verschieben der zweiten Aufnahmevorrichtung 14 in Längsrichtung zu ermöglichen, sitzt diese in einer Vielkeilnabe 28, die den Drehantrieb des Kettenrades 27 kraftschlüssig auf die zweite Aufnahmevorrichtung 14 überträgt, aber gleichzeitig eine freie Verschiebung derselben in Längsrichtung ermöglicht. Zum Verschieben der zweiten Aufnahmevorrichtung 14 in Längsrichtung ist eine Hebevorrichtung 30 vorgesehen, die in einer Führungshülse 29 verschiebbar angeordnet ist und über ein Rad 31 über eine Kurve 32 geführt wird. Die Kurve 32 kann in ihrer Höhe veränderbar ausgeführt sein, so daß der Hub der zweiten Aufnahmevorrichtung 14 einer unterschiedlichen Arbeitshöhe für verschieden lange Fläschchen anpaßbar ist.

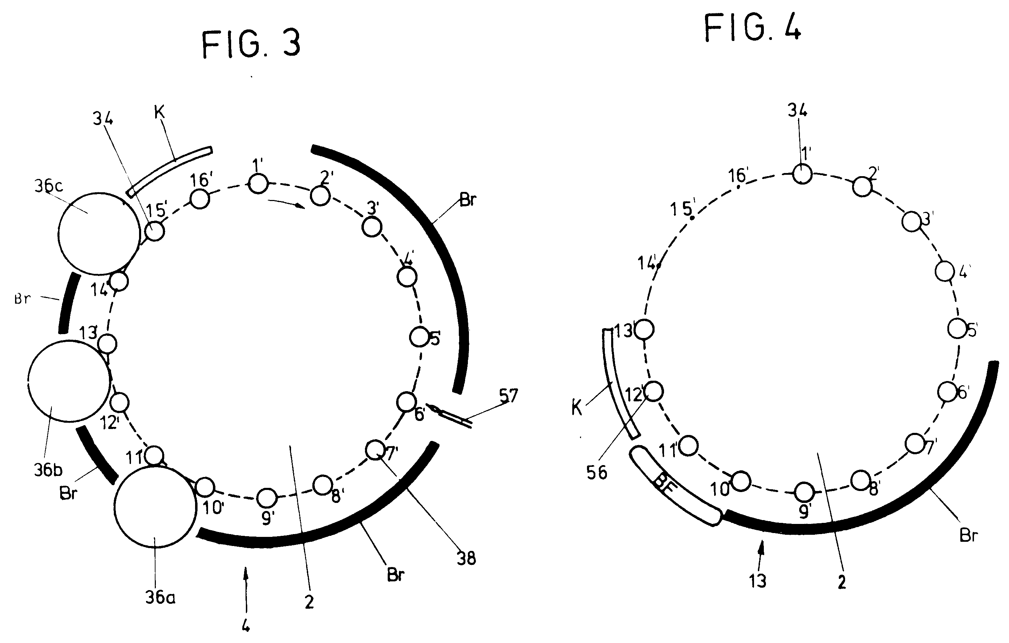

Außerhalb des Karussells 2 sind unterhalb der ersten Aufnahmevorrichtungen 5 mehrere Brenner 33 angeordnet, die einen drehend herbeigeführten, aus den ersten Aufnahmevorrichtungen 5 herausstehenden Glasrohrabschnitt 34 auf eine Temperatur erhitzen, bei der dieser durch Zug vom Glasrohr 12 abgetrennt werden kann. Ein sich dabei ggf. verschließendes Glasrohrende 38 wird mittels eines Stichbrenners 57 (Fig. 3) wieder geöffnet und durch weitere (nicht dargestellte) Brenner wieder erhitzt.

In Drehrichtung des Karussells 2 an diese Brenner anschließend folgt eine Formstation 35, die auf einer Basis 75 außerhalb des Karussells 2 angeordnet ist und zur Formung einer Mündung M in die Glasrohrenden 38 dient. Die Formstation 35 trägt eine Formrolle 36, die im wesentlichen die Form einer Scheibe hat und die an ihrem Umfang zur Formung der Mündung M in das Glasrohrende 38 ein Profil 37 aufweisen kann.

Die Formrolle 36 hat einen Durchmesser, der größer ist als der Abstand zwischen zwei aufeinanderfolgenden Glasrohren 12 und wird so geführt, daß sie möglichst ständig in Kontakt mit einem Glasrohrende 38 ist, d.h., daß die Formrolle 36 praktisch ständig von einem zwangsgedrehten Glasrohrende 38 angetrieben wird und daher keine Drehpause hat. Hierdurch treten nur geringe Reibungskräfte zwischen der Formrolle 36 und einem neu mit ihr in Kontakt kommenden Glasrohrende 38 durch unterschiedliche Bahngeschwindigkeiten der jeweiligen Umfänge auf, da die Formrolle 36 nur geringfügig von dem neuen Glasrohrende 38 beschleunigt werden muß. Zur Unterstützung der Rotation der Formrolle 36 kann die Formrolle 36 mit einem Propeller 58 versehen sein, über den die Formrolle 36 mittels eines Luftstroms angetrieben werden kann. Im dargestellten bevorzugten Ausführungsbeispiel hat die Formrolle 36 einen Durchmesser von ca. 20 cm, günstig sind allgemein Durchmesser von 15 cm bis 28 cm.

An der Formstation 35 ist ein steuer- und regelbarer Feinantrieb 39 mit Inkrementalgeber befestigt, der über eine Gewindespindel 40 einen Schlitten 41, der auf einer Gleitschiene 42 sitzt, verschiebt. Auf dem Schlitten 41 ist die Formrolle 36 drehbar gelagert angeordnet und zur Formung der Mündung in einer geeigneten Höhe zum Glasrohrende 38 justiert.

Die rotierenden Glasrohre 12 werden durch Drehen des Karussells 2 an der Formstation 35 vorbeigefahren. Die Formrolle 36 paßt sich dabei mit einer geradlinigen Hin- und Herbewegung, die im wesentlichen radial zum Karussell 2 verläuft, der Kreisbahn des rotierenden Glasrohres 12 unter gleichzeitigem Einrollen des Glasrohrendes 38 an. Auch eine transversale (Sekante) Hin- und Herbewegung zum Karussell 2 ist möglich, dabei steht die Hin- und Herbewegung dann in einer anderen Phasenverschiebung zur periodischen Folge der vorbeifahrenden Haltefutter 7. Gegen Ende der Formgebung ist die Formrolle 36 vorzugsweise so weit zur Karusselldrehachse KD verschoben, daß der Freiraum bis zum nachfolgenden Glasrohrende 38 von der Formrolle 36 ganz ausgefüllt wird, so daß diese sofort mit der Formung des nachfolgenden Glasrohrendes 38 beginnen kann.

Prinzipiell ist es ausreichend, wenn die Formstation 35 bzgl. des Karussells einmal so ausgerichtet wird, daß die Hin- und Herbewegung der Formrolle 36, wie oben beschrieben, radial zum Karussell 2 erfolgt. Die Formstation 35 kann dann fest mit dem Gestell 3 verbunden sein. Soll jedoch auch eine transversale Hin- und Herbewegung der Formrolle 36 bzgl. des Karussells 2 möglich sein, so wird unten an der Basis 75 eine Querführung 60 bzgl. des Karussells 2 vorgesehen, in der die gesamte Formstation 35 in einer Richtung quer zur Gleitschiene 42 verschiebbar ist. Diese Verschiebung kann mittels Hand z.B. über eine Handkurbel erfolgen, vorteilhafterweise geschieht dies jedoch mittels eines Schrittmotors 44, der über ein Zahnrad 45 auf eine Zahnstange 46 wirkt und dadurch die Formstation 35 in tangentialer Richtung zum Karussell 2 um einen definierten Betrag verschiebt. Wichtig ist hierbei, daß die Querführung 60 während des Formprozesses gegen ein unbeabsichtigtes Verschieben gesichert ist.

Alternativ kann diese transversale (Sekante) Hin- und Herbewegung zum Karussell 2 und die damit verbundene Phasenverschiebung zur periodischen Folge der vorbeifahrenden Haltefutter 7 auch durch die Software der Leitachsenbahnsteuerung realisiert werden.

Weitere entsprechende Formstationen mit weiteren Formrollen 36b, 36c (Fig. 3) können in Drehrichtung des Karussells 2 angebracht sein, wobei vorzugsweise bis zu drei Formstationen verwendet werden, die das Glasrohrende 38 vorteilhafterweise in unterschiedlichen Höhen einrollen, wodurch eine besondere Ausgestaltung des Halsbereiches eines Fläschchens oder einer Ampulle möglich ist.

Zur Unterstützung des Glasrohrendes 38 während der Formgebung ist ein Formfinger 43 vorgesehen, der positionsgenau unter die Mitte des Glasrohres 12 bringbar und in das Glasrohrende 38 einfahrbar ist. Der eingefahrene Formfinger 43 bildet für das von der Formrolle 36 eingedrückte, wärmeerweichte Glasrohrende 38 ein Widerlager, bis zu dem die Einrollung des Glasrohrendes 38 erfolgt. Durch den Abstand der der Formrolle 36 entgegengerichteten Wand des Formfingers 43 zur Längsachse des Glasrohres 12 wird entsprechend der Innendurchmesser der zu formenden Mündung am Glasrohrende 38 bestimmt. Vorzugsweise hat der Formfinger 43 einen Radius von 2 mm bis 50 mm.

Bei den bisher bekannten Fläschchenmaschinen war bisher immer je ein Formfinger einer Werkzeug- oder Formstation zugeordnet, zusammen mit der neuen Formstation ist es jedoch günstiger, wenn jede Aufnahmevorrichtung 5 einen Formfinger 43 zugeordnet hat, wodurch mehr Zeit für das Ein- und Ausbringen des Formfingers 43 in das Glasrohrende 38 besteht und der Formfinger 38 auch genügend Zeit zum Abkühlen bis zum nächsten Formvorgang hat. Hierbei ist der Formfinger 43 in der Höhe verschiebbar an einem Horizontalschlitten 50 angebracht, der auf einer Schiene 52 über Rollen 51 vor- und zurückschiebbar ist. Die Schiene 52 ist auf einer mittleren Ebene 49 des Karussells 2 befestigt. Mittels des Horizontalschlittens 50 ist der Formfinger 43, der am vorderen Ende des Horizontalschlittens 50 sitzt, von einer Ruheposition A in die gemeinsame Längsachse der zugehörigen Aufnahmevorrichtungen 5 und 14 verschiebbar. In dieser Position B kann der Formfinger 43 mittels einer von einer Kurve 55 geführten Kurvenrolle 54 in das Glasrohrende 38 angehoben werden.

Das Verschieben des Horizontalschlittens 50 erfolgt vorzugsweise mittels Druckluft über einen (nicht dargestellten) Pneumatikzylinder, der entweder direkt oder vorzugsweise wegen des geringen in radialer Ausdehnung zur Verfügung stehenden Raumes über eine (nicht dargestellte) Hebelanordnung mit dem Horizontalschlitten 50 verbunden sein kann.

Um eine Überhitzung des Formfingers 43 zu vermeiden, wird dieser nach jeder Formgebung aus dem Glasrohrende 38 nach unten herausgezogen, auch wenn sich noch weitere Formstationen mit Formrollen 36b, 36c (Fig. 3) anschließen, da zwischen diesen Formrollen das Glasrohrende 38 mittels (nicht dargestellter) Brenner wieder erhitzt wird.

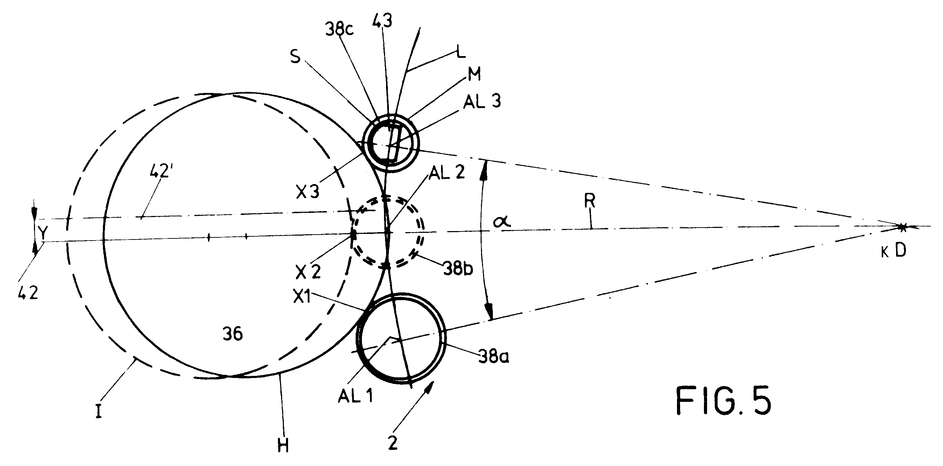

Nach der letzten Formstation wird das fertig geformte Glasrohrende 38c (Fig. 5) unter die Transformationstemperatur des Glases abgekühlt und durch Öffnen des Haltefutters 7 auf eine entsprechend der Artikellänge in vertikaler Richtung verstellbare Prallplatte (nicht dargestellt) fallengelassen. Nachdem die Mündung auf der Prallplatte aufliegt, wird das Haltefutter 7 über Zylinder 6 wieder geschlossen. Anschließend wird die direkt unterhalb des Glasrohres 12 angeordnete zweite Aufnahmevorrichtung 14 über die Kurve 32 noch soweit nach oben gefahren, daß die fertig geformte Mündung M des Glasrohrendes 38 einen Stempel 47 gegen eine Feder 48 ein Stück weit in die zweite Aufnahmevorrichtung 14 hineinschiebt. Hierzu ist das untere Haltefutter 15 über den Zylinder 16 geöffnet und wird nach dem Hochfahren über denselben Zylinder wieder geschlossen, um das Glasrohr zu fassen.

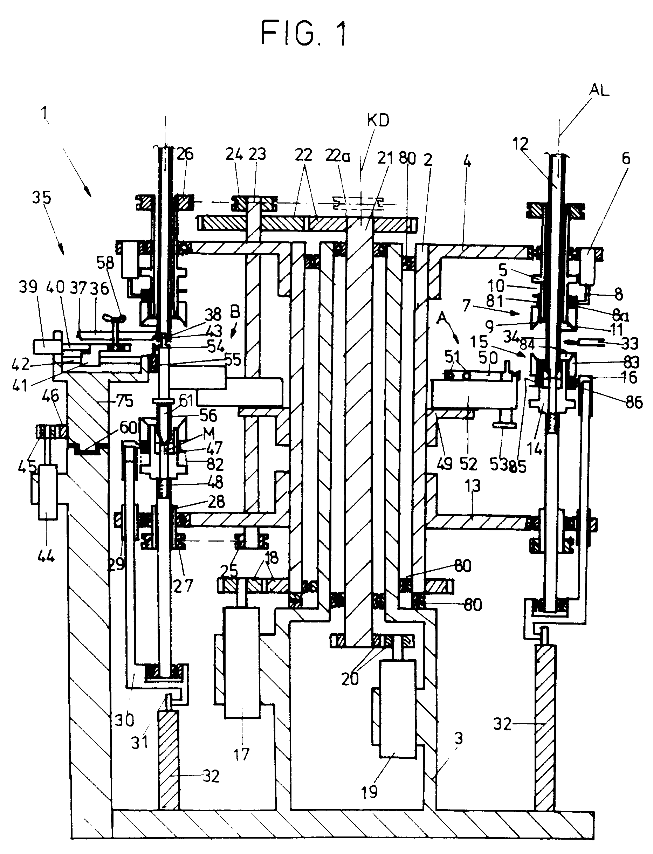

Der Glasrohrabschnitt 34 mit der fertig geformten Mündung M wird, wie oben beschrieben, mittels Brenner 33 so weit erhitzt, daß er durch Zug nach unten abtrennbar ist. Beim Abtrennen verschließt sich der abgetrennte Glasrohrabschnitt 34 an seinem oberen Ende unter Bildung einer Fläschchen-Preform. Das obere Glasrohr 12 wird, wie oben beschrieben, weiter verarbeitet und der abgetrennte Glasrohrabschnitt 34 fährt in der zweiten Aufnahmevorrichtung 14 weiter nach unten. Zur Formung eines Bodens 61 an die Fläschchen-Preform wird das obere Ende des abgetrennten Glasrohrabschnittes 34 mittels (nicht dargestellter) Brenner weiter erhitzt und die Fläschchen-Preform in einem Bodenformschritt zu einem fertigen Fläschchen 56 geformt. Die Formung des Bodens kann mittels einer außerhalb des Karussells angeordneten Bodenformstation erfolgen, wie sie z.B. die DE-PS 12 61 638 beschreiben. Wie in Figur 1 dargestellt, kann die Bodenformung aber auch besonders einfach an dem Horizontalschlitten 50 erfolgen.

Hierzu ist an jedem Horizontalschlitten 50 unterhalb des Formfingers 43 je ein Bodenformer 53, der normalerweise ein Kohlepressling ist, angeordnet. Mit dieser Anordnung wird erreicht, daß der Bodenformer 53 mittels des Horizontalschlittens 50 zusammen mit dem Formfinger 43 in die gemeinsame Längsachse der Aufnahmevorrichtungen 5 und 14 fährt, wenn letzterer zur Mündungsformung in das untere Glasrohrende 38 eingebracht wird. In dieser Stellung des Bodenformers 53 fährt die zugehörige untere Aufnahmevorrichtung 14 über die Kurve 32 nach oben, bis der zu formende Boden 61 mit dem Bodenformer 53 in Kontakt kommt. Durch die oben beschriebene Drehung der zweiten Aufnahmevorrichtung 14 erfolgt eine gleichmäßige Bodenformung, wobei vor allem bei Glasrohren mit einer größeren Dicke (ab ca. 15 mm äußerer Durchmesser) vorteilhafterweise über die Aufnahmevorrichtung 14 eine Stützluft in das Fläschcheninnere gegen den Boden 61 eingeblasen wird, damit dieser nicht nach unten absackt, sondern mit der gesamten Bodenfläche in Kontakt mit dem Bodenformer 53 kommt.

Nach der Bodenformung wird das fertig geformte Fläschchen 56 in der zweiten Aufnahmevorrichtung 14 über die Kurve 32 wieder abgesenkt, damit auch der Formfinger 43, wie oben beschrieben, aus dem unteren, nun geformten Glasrohrende 38c ausgefahren werden kann. Der Bodenformer 53 fährt dann mit dem Formfinger 43 mittels des Horizontalschlittens 50 in Richtung auf die Drehachse KD des Karussells 2 wieder in seine Ruheposition A zurück.

Danach wird das Fläschchen 56 abgekühlt, in einer nachfolgenden Station durch einen Entnahmegreifer im Bodenbereich gegriffen und anschließend durch Öffnen und Absenken der Spannbacken 84 des Haltefutters 15 freigegeben. Das leere Haltefutter 15 wird vorzugsweise automatisch von eventuellen Verunreinigungen gereinigt und anschließend zur Aufnahme des nächsten Glasrohrendes 38 nach oben gefahren, wobei der Formungsprozeß wieder von neuem beginnt.

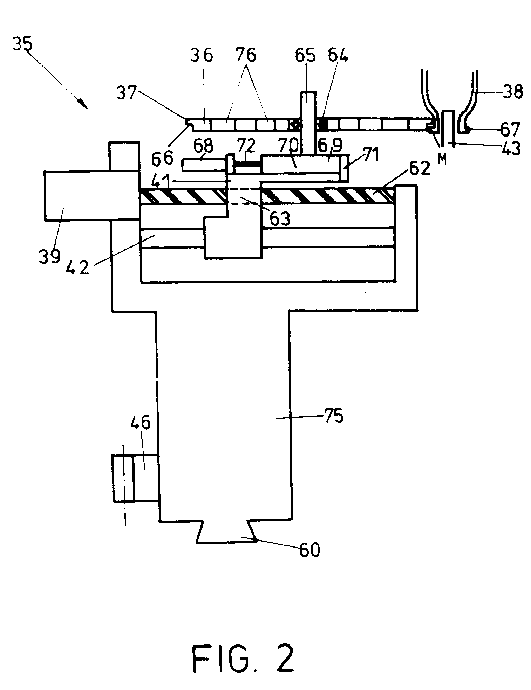

In Figur 2 ist der Aufbau einer Formstation 35 mit weiteren Einzelheiten dargestellt. Die Basis 75 der Formstation hat an ihrem Fuß die schon erwähnte Querführung 60 und die Zahnstange 46, mittels der die gesamte Formstation 35 in einer Richtung quer zur Arbeitsbewegung der Formrolle 36 versetzbar ist. Über die Querführung 60 ist es möglich, die Arbeitsbewegung der Formrolle 36 genau radial auf die Drehachse des Karussells auszurichten oder, sofern gewünscht, parallel zur Radialen zu versetzen, so daß eine transversale Richtung resultiert. Eine solche transversale Richtung ist vorzugsweise in Drehrichtung des Karussells von der radialen versetzt. An der Basis 75 sind der Feinantrieb 39 und die Gleitschiene 42 befestigt, auf der der Schlitten 41 für die Formrolle 36 sitzt. Eine Gewindestange 62 ist zum Verschieben des Schlittens 41 vorgesehen. Die Gewindestange 62 ist an ihrem einen Ende in der Formstationbasis 75 drehbar gelagert und an ihrem anderen Ende direkt mit dem Feinantrieb 39 verbunden. Der Schlitten 41 weist eine Gewindedurchführung 63 auf, durch die die Gewindestange 62 hindurchgeführt ist. Durch Drehen der Gewindestange 62 mittels des Motors 39 kann der Schlitten 41 entsprechend vor- bzw. zurück entlang der Gleitschiene 42 verschoben werden. Vorzugsweise ist die Gleitschiene 42 entweder doppelt ausgeführt oder hat einen, vom kreisförmigen abweichenden Querschnitt, so daß eine stabile Führung des Schlittens 41 gegeben ist und die Gewindestange 62 von einer seitlichen Belastung durch den Schlitten 41 entlastet ist.

In dem Schlitten 41 ist aus Sicherheitsgründen eine Anfederung vorgesehen, die ein Zurückweichen der Formrolle 36 bei einem zu hohen Andruckwiderstand - z.B. einem nicht genügend wärmeerweichten Glasposten - ermöglicht. Die Anfederung erfolgt im wesentlichen mit einem Pneumatikzylinder 68, der ein Trägerteil 69 in Richtung auf das Karussell 2 verschiebt. Das Trägerteil 69 wird dabei in einer Führung 70 in dem Schlitten 41 gehalten, wobei ein Anschlag 71 vorgesehen ist, damit das Trägerteil 69 durch den Zylinder 68 nicht aus dem Schlitten 41 herausgeschoben wird, wenn kein Widerstand gegen die Formrolle 36 wirkt. Bei einem zu großen Andruckwiderstand gegen die Formrolle 36 kann diese mit dem Trägerteil 69 gegen den Zylinder 68 in einen Ausweichraum 72 zurückweichen, so daß eine Beschädigung der Präzisionsteile vermieden wird. Ein weiterer positiver Effekt der Anfederung ist, daß sich die Formrolle 36 schwankenden Glasmengen während der Formung des Mündungsbereiches anpassen kann und damit auch bei etwas schwankenden Glasdicken des Glasrohres 12 die Formung eines kreisrunden Außendurchmessers im Mündungsbereich ermöglicht. Ohne diese Anfederung müßten Glasübermengen während der Formung zwischen dem Formfinger 43 und der Formrolle 36 durch diese nach oben bzw. unten weggeschoben werden, damit auch hier ein kreisrunder Außendurchmesser erreicht wird.

In dem Trägerteil 69 des Schlittens 41 ist eine Welle 65 angebracht, auf der die Formrolle 36 über ein Lager 64 drehbar befestigt ist. Die Achse der Welle 65 ist vorteilhafterweise parallel zu den Glasrohrachsen angeordnet. Die Formrolle 36 weist an ihrem Rand das Profil 37 auf, dessen untere Ausnehmung 66 an der Mündung M einen Kragen 67 formt.

Die Formrolle 36 ist auf der Welle 65 zusammen mit dem Lager 64 in der Höhe justierbar bzw. gegen eine anders ausgebildete Formrollen austauschbar. Dies ist erforderlich, um die Formrollen in ihrer Höhe bzgl. des Glasrohrendes 38 zu justieren und um anders gestaltete Mündungsbereiche zu formen.

Vorteilhafterweise weist die Formrolle 36 in ihrem Körper eine Vielzahl von Durchbrüchen 76 auf, die das Gewicht der Formrolle reduzieren, aber dennoch eine genügende Stabilität der Formrolle 36 gewähren. Hierdurch wird bei unterschiedlichen Umfangsgeschwindigkeiten zwischen der Formrolle 36 und dem zu formenden Glasrohrende 38 die Trägheit vermindert.

In Figur 3 ist zur Erläuterung des Ablaufs einer Fläschchenformung schematisch die obere Ebene 4 des Karussells 2 aus Fig. 1 mit sechzehn Aufnahmevorrichtungen 5 dargestellt, die mit den Positionen 1' bis 16' bezeichnet sind. Prinzipiell kann die neue Formstation mit einer Fläschchenmaschine mit beliebiger Zahl von Haltefuttern 7 zusammenwirken.

So sind für Spezialanwendungen z.B. 3 bis 64 Haltefutterpositionen denkbar, wobei 12 bis 24 Haltefutterpositionen besonders günstig sind.

In der Position 1' sind die Haltefutter 7 geöffnet und das jeweilige Glasrohr 12 wird, wie oben beschrieben, auf eine in der Höhe verstellbare Prallplatte fallengelassen und anschließend von der unteren Aufnahmevorrichtung 14 gegriffen. Gleichzeitig wird der Glasrohrabschnitt 34 von den Positionen 2 bis 5 mittels Brenner Br so weit erhitzt, daß es in der Position 5' durch Zug der unteren Aufnahmevorrichtung 14 nach unten vom Glasrohr 12 abgetrennt werden kann. Das sich dabei verschließende neue Glasrohrende 38 wird mittels des Stichbrenners 57 wieder geöffnet und der Mündungsbereich bis zur Position 10' mittels weiterer Brenner Br auf Formungstemperatur erhitzt. Zwischen den Positionen 10' und 11' ist die erste Formstation mit der Formrolle 36a angeordnet, weitere Formstationen schließen sich mit Formrollen 36b und 36c zwischen den Positionen 12' und 13' bzw. 14' und 15' an. Jede Formstation formt in einer möglicherweise unterschiedlichen Höhe am Glasrohrende 38, so daß mit der beschriebenen Fläschchenmaschine auch über eine größere Längsausdehnung geformte Mündungsbereiche, wie z.B. bei Ampullen, gefertigt werden können. Jede Formrolle 36 kann das Glasrohrende 38 beliebig weit einrollen, wobei dem resultierenden Innendurchmesser des fertig eingerollten Glasrohrendes 38c (Fig. 5) nur durch den Durchmesser des Formfingers Grenzen gesetzt sind.

Zwischen den Formrollen 36a bis 36c sind weitere Brenner Br angeordnet, die den zu formenden Mündungsabschnitt auf Formungstemperatur halten. Im Bereich der Positionen 15' und 16' wird der fertig geformte Mündungsbereich entlang einer ersten Kühlstrecke K abgekühlt, so daß dieser Bereich von dem unteren Haltefutter 15 ohne Deformierung des Glasmantels gegriffen werden kann (Position 1').

Die Vollendung des Formprozesses wird in Figur 4, die zusammen mit Figur 1 zu betrachten ist, erläutert, in der die sechzehn Positionen 1' bis 16' der unteren Aufnahmevorrichtungen 14 des Karussells 2 aus Figur 1 dargestellt sind. In den Positionen 1' bis 5' arbeiten die unteren Aufnahmevorrichtungen 14 mit den jeweiligen oberen Aufnahmevorrichtungen 5 wie beschrieben zusammen und trennen dabei eine Fläschchen-Preform in Position 5' vom Glasrohr 12 ab. Der dabei sich verschließende Boden der Fläschchen-Preform wird in einer an der unteren Ebene 13 des Karussells 2 angeordneten Brennerreihe Br weiter auf Formungstemperatur bis zur Position 10' erhitzt. In Position 10' fährt die untere Aufnahmevorrichtung 14 nach oben und drückt den wärmeerweichten Boden der Fläschchen-Preform gegen den Bodenformer 53. Hierdurch wird bis zur Position 11' der Boden 61 geformt und das fertig geformte Fläschchen 56 in der unteren Aufnahmevorrichtung 14 wieder abgesenkt, damit auch der in der oberen Ebene 4 in Aktion befindliche Formfinger 43 wieder aus dem entsprechenden Glasrohrende 38 herausgezogen werden kann.

Nach der Bodenformung BF schließt sich bis zur Position 13 eine zweite Kühlstrecke K an, in der das fertige Fläschchen 56 unter die Transformationstemperatur des Glases abgekühlt wird, damit es sich beim Austragen aus dem Karussell nicht mehr verformt. Zum Austragen des Fläschchens 56 wird in Position 13 das untere Haltefutter 15 geöffnet, und wie oben beschrieben das Fläschchen mittels ein Greifers entnommen.

In Position 15' und 16' wird das leere Haltefutter 15 automatisch von eventuellen Verunreinigungen zur Aufnahme des nächsten Mündungsbereiches gereinigt.

Die Fläschchenmaschine ist nicht auf die dargestellte Zahl von sechzehn Positionen beschränkt, vorteilhaft sind acht bis zweiunddreißig Positionen, in Spezialfällen sind auch drei bis vierundsechzig Positionen oder mehr ausführbar.

In Figur 5 (die zusammen mit Fig. 1 zu betrachten ist) ist schematisch eine pausenlose Formung mittels der Formrolle 36 über einen Winkel α (Winkel zwischen zwei benachbarten Aufnahmevorrichtungen) dargestellt. In der durchgezogen gezeichneten Position H ist die Formrolle 36 mit ihren, den Futterachsen AL 1 und 3 der entsprechenden Haltefutter 7 nächstliegenden Umfangspunkten X 1 und 3 in Kontakt mit einer fertig geformten Mündung M eines fertig eingerollten Glasrohrendes 38c und einem noch nicht geformten Glasrohrende 38a. Da das Karussell 2 sich in Pfeilrichtung kontinuierlich dreht und die Glasrohrenden 38 in den Haltefuttern 7 entsprechend auf einer kreisförmigen Ablaufbahn L entlang ziehen, muß die Formrolle 36 vom Karussell in einer dem Glasrohrende 38a ausweichenden Bewegung in einer Richtung 42 im wesentlichen quer zur Ablaufbahn L zurückgezogen werden. Die Zurückfahrbewegung der Formrolle 36 erfolgt zu einer gestrichelt gezeichneten Position I mit einer solchen Geschwindigkeit, daß gleichzeitig das sich drehende Glasrohrende 38a um einen gewissen Betrag eingerollt wird. Beim Erreichen der Position I hat der, der Futterachse AL2 nächstliegende Umfangspunkt X2 der Formrolle 36 das Glasrohrende 38b schon weitgehend eingerollt, auch eine vollständige Einrollung ist bis zu dieser Position schon möglich.

Zur endgültigen Formgebung fährt die Formrolle 36 wieder vor in Richtung auf die Drehachse KD des Karussells und folgt dabei gewissermaßen dem in dem Karussell 2 weitergeführten Glasrohrende 38b. Die Formrolle 36 drückt dabei das wärmeerweichte Glasrohrende 38 gegen ein Kreisbogensegment S des Formfingers 43, das den Innenradius der zu formenden Mündung bestimmt. Das Kreisbogensegment S ist dabei so ausgebildet, daß es das wärmeerweichte Glasrohrende 38 während der gesamten Formung gegen die Formrolle 36 abstützen kann.

Vorteilhafterweise wird das Glasrohrende 38b schon vor Erreichen der Position H auf den gewünschten eingerollten Durchmesser der Mündung M eingerollt, so daß bis zum Erreichen der Position H noch eine gewisse Glättzeit zur Verfügung steht, in der der Mündungsbereich nicht mehr eingerollt wird, aber die bis dahin erfolgte Einrollung stabilisiert wird. Beim Erreichen der Position H beginnt der Formgebungsprozeß am nachfolgenden Glasrohrende 38a von neuem.

Die Glättung des eingerollten Mündungsbereiches erfolgt vorzugsweise über 20% bis 50% des Winkels , insbesondere über 30% bis 36%.

Gepunktet ist auch eine um die Strecke Y versetzt angeordnete Gleitschiene 42' dargestellt. Die Verschiebung der Formrolle erfolgt hier nicht mehr in Richtung auf eine Radiale R des Karussells 2, sondern in Richtung einer Sekanten.

Bei der dargestellten Formgebung besteht keine Pause im Formgebungsprozeß, die Formrolle 36 übernimmt lückenlos das jeweils nachfolgende Glasrohrende 38a. Bei großen Differenzen zwischen den Außendurchmessern zwischen Glasrohrende 38a und Mündung M kann es jedoch sinnvoll sein, mit einer kurzen Pause zu arbeiten, da alle Glasrohre 12 mit gleicher Drehzahl angetrieben werden und entsprechend aufgrund der unterschiedlichen Außendurchmesser unterschiedliche Bahngeschwindigkeiten aufweisen. In einer kurzen Pause kann dann z.B. die Drehzahl der Formrolle 36 etwas erhöht werden, grundsätzlich wird jedoch durch eine kurze Pause im Bereich weniger Millisekunden eine Kopplung der unterschiedlichen Umfangsgeschwindigkeiten des Glasrohrendes 38a bzw. der Mündung M über die Formrolle 36 vermieden.

Mit den beschriebenen Verfahren und der Fläschchenmaschine lassen sich bei kontinuierlicher Drehzahl des Karussells hohe Fertigungsleistungen erzielen. So sind z.B. mit der dargestellten Ausführungsform mit 2 x 16 Positionen Fertigungszahlen für Bördelrandfläschchen von 2.000 bis 5.000 Stück/Stunde möglich. Solche Stückzahlen sind mit den herkömmlichen Verfahren bzw. Fläschchenmaschinen nicht erreichbar.

## Patentansprüche

1. Vorrichtung zum Verformen des Endbereiches eines an seinem Ende (38) wärmeerweichten Glasrohres (12), insbesondere zur Ausbildung des Mündungsbereiches von aus Glasrohren (12) herzustellenden Fläschchen mit
- einer Anzahl von für die Aufnahme von Glasrohren (12) in gleichen Teilungsabständen voneinander angeordneten, rotierbaren Haltefuttern (7), welche in kontinuierlicher Bewegung mit wählbarer Bahngeschwindigkeit entlang einer Ablaufbahn (2) bewegbar sind,
- an der Ablaufbahn (2) angeordneten Mitteln (33, Br) zum Erwärmen der aus den Haltefuttern (7) vorstehenden Glasrohrenden (38),
- mindestens einer Formrolleneinrichtung (35), deren mindestens eine Formrolle (36) um eine Welle (65) drehbar gelagert und gegen ein erweichtes Glasrohrende (38) anstellbar ist, und
- einem mit der Formrolleneinrichtung (35) während der Formung als Gegenwerkzeug zusammenwirkenden und in das offene Ende eines Glasrohres (12) einführbaren Formfinger (43),
dadurch gekennzeichnet, daß die mindestens eine Formrolle (36) mittels eines steuerbaren Feinantriebes (39) relativ zu einem stationären Support (75) der Formrolleneinrichtung (35) hin und her beweglich ausgebildet ist, und daß eine mit dem Bewegungsantrieb (17) der Haltefutter (7) zusammenwirkende programmierbare Steuereinrichtung für den Feinantrieb (39) vorgesehen ist, mit der der Formrolle (36) ein die Periodizität der an der Formrolleneinrichtung (35) vorbeibewegten Haltefutter (7) aufweisender Bewegungsablauf erteilbar ist, bei dem die Formrolle (36) unter veränderbarem Abstand ihres einer vorbeibewegten Futterachse (AL 1-3) nächstliegenden Umfangspunktes (X) von dieser Futterachse relativ zur vorbeibewegten Futterachse bogenförmig um diese herum bewegbar ist, wobei die Formrolle (36) bei Annäherung eines Haltefutters (7) von der Ablaufbahn (L) der Haltefutter (7) zurückbewegbar und bei sich entfernendem Haltefutter (7) wieder gegen die Ablaufbahn in den Abstandsraum zwischen zwei Haltefuttern (7) vorbewegbar ist.

2. Vorrichtung nach Anspruch 1, dadurch gekennzeichnet, daß die Achse der Formrolle (36) zur Glasrohrachse im wesentlichen parallel ist.

3. Vorrichtung nach Anspruch 1 oder 2, dadurch gekennzeichnet, daß die Formrolleneinrichtung (35) stationär in bezug auf die Ablaufbahn (2) der Haltefutter (7) angeordnet und in einer Richtung (42) im wesentlichen quer zur Richtung der Ablaufbahn (L) der Haltefutter (7) beweglich ist.

4. Vorrichtung nach einem der vorhergehenden Ansprüche, dadurch gekennzeichnet, daß die Ablaufbahn (2) der Haltefutter (7) eine Kreisbahn ist und die Rohrachsen (AL) auf einem Zylindermantel liegen.

5. Vorrichtung nach Anspruch 4, dadurch gekennzeichnet, daß die Haltefutter (7) an einem mit stetiger Drehbewegung antreibbaren Drehtisch (4) angeordnet sind.

6. Vorrichtung nach einem der vorhergehenden Ansprüche, dadurch gekennzeichnet, daß die Änderung des Abstandes des einer Futterachse (AL) nächsten Punktes (X) des Formrollenumfanges von dieser Futterachse während der relativen Bogenbewegung der Formrolle (36) um die Futterachse durch eine Phasenverschiebung zwischen der periodischen Hin- und Herbewegung der Formrolle und der periodischen Folge der vorbeibewegten Haltefutter (7) erzielbar ist.

7. Vorrichtung nach Anspruch 4 oder 5, dadurch gekennzeichnet, daß die Änderung des Abstandes des einer Futterachse (AL) nächsten Punktes (X) des Formrollenumfanges von dieser Futterachse während der relativen Bogenbewegung der Formrolle (36) um die Futterachse durch eine horizontale Versetzung (Y) der Gleitschiene (42') der Formrolle aus einer Radialen (R) der Kreisbahn in Richtung der Ablaufbahn (2) erzielbar ist.

8. Vorrichtung nach einem der vorhergehenden Ansprüche, dadurch gekennzeichnet, daß je Formrolleneinrichtung (35) nur eine einzige Formrolle (36) vorgesehen ist.

9. Vorrichtung nach einem der vorhergehenden Ansprüche, dadurch gekennzeichnet, daß der mit einer Formrolle (36) zusammenwirkende Formfinger (43) einen kleineren Querschnitt als der angestrebte Innenquerschnitt des zu formenden Glasrohrendes (38) aufweist und mit einem Kreisbogensegment (S) versehen ist, welches sich über denjenigen Umfangswinkel erstreckt, über den die Formrolle im Eingriff mit dem Glasrohr (12) abrollt, wobei der Radius des Kreisbogensegmentes gleich dem Radius des angestrebten Innenquerschnittes ist.

10. Vorrichtung nach einem der vorhergehenden Ansprüche, dadurch gekennzeichnet, daß die Formrolle (36) einen Durchmesser aufweist, der größer ist als der Teilungsabstand zwischen den Haltefuttern (7), vermindert um den minimal verarbeitbaren Glasrohrradius und vermindert um den minimalen Mündungsradius.

11. Vorrichtung nach Anspruch 10, dadurch gekennzeichnet, daß der Durchmesser der Formrolle (36) 30% bis 100% größer als der Teilungsabstand zwischen den Haltefuttern (7), vermindert um den minimal verarbeitbaren Glasrohrradius und vermindert um den minimalen Mündungsradius, ist.

12. Vorrichtung nach einem der vorhergendenden Ansprüche, dadurch gekennzeichnet, daß die Formrolle (36) auf dem stationären Support (75) mittels eines Schlittens (41) hin- und herbewegbar ist, welcher mittels eines Servomotors (39) über eine Leitachsbahnsteuerung synchron zur periodischen Folge der vorbeibewegten Haltefutter (7) verschiebbar ist.

13. Vorrichtung nach einem der vorhergehenden Ansprüche, dadurch gekennzeichnet, daß die Formrolle (36) relativ zur theoretischen Bewegung durch Anfederung (68) elastisch gegen das zu verformende Glasrohrende (38) wirkt.

14. Verwendung der Vorrichtung nach einem der vorhergehenden Ansprüchen in einer Maschine (1) zum Herstellen von Fläschchen oder Ampullen aus Glas, in der die um ihre eigenen Längsachsen rotierenden Haltefutter (7) über die Peripherie eines kontinuierlich drehangetriebenen Karussells verteilt und an zur Bearbeitung der Glasrohre (12) vorgesehenen Stationen auf einer Kreisbahn vorbeiführbar sind.

15. Verfahren zum Formen eines Fläschchens aus einem Glasrohr (12), wobei aus dem einen Ende des Glasrohres das Fläschchen geformt wird, mit den Schritten
Transportieren einer Anzahl von Glasrohren (12) in gleichen Teilungsabständen kontinuierlich entlang einer Ablaufbahn (2),
Erwärmen des einen Endes (38) jedes Glasrohres,
Formen einer Mündung durch Einrollen des wärmeerweichten Glasrohrendes mit einer Formrolle (36) gegen einen Formfinger (43), wobei das Glasrohr um seine Längsachse rotiert,
Abtrennen des Glasrohrabschnittes mit der geformten Mündung vom Glasrohr, und
Formen eines Fläschchenbodens in den abgetrennten Glasrohrabschnitt,
dadurch gekennzeichnet,
daß die Formrolle (36) relativ zu der Ablaufbahn (2) hin und herbewegt wird mit der Periodizität der Abfolge der vorbeibewegten Glasrohre (12),
daß die Formrolle (36) unter Verkleinerung des Abstandes ihres einer vorbeibewegten Glasrohrlängsachse (AL 1-3) nächstliegenden Umfangpunktes (X) zu dieser Längsachse relativ zu dieser bogenförmig um diese herum bewegt wird, und
daß die Formrolle (36) dabei bei Annäherung eines Glasrohres (12) von der Ablaufbahn (2) der Glasrohre zurückbewegt wird und bei sich entfernendem Glasrohr wieder gegen die Ablaufbahn in den Abstandsraum zwischen dem sich entfernenden und dem nachfolgenden Glasrohr vorbewegt wird.

## Claims

1. Apparatus for transforming the end region of a glass tube (12) whose end (38) has been softened by heat, in particular to form the mouth region of small bottles to be manufactured from glass tubes (12), comprising
- a number of rotatable holding chucks (7) for receiving the glass tubes (12), which chucks are spaced apart at equal intervals and are movable continuously along a path of transport (2) at a selectable speed,
- means (33, Br) for heating the glass tube ends (38) projecting from the holding chucks (7) are provided on the path of transport (2),
- at least one shaping roller device (35), whose at least one shaping roller (36) is rotatably mounted about a shaft (65) and is applicable to a softened glass tube end (38), and
- a shaping finger (43) cooperating as a counter-tool with the shaping roller device (35) during shaping and insertable into the open end of a glass tube (12),
characterised in that the at least one shaping roller (36) is formed so as to reciprocate by means of an adjustable precision drive (39) relative to a stationary support (75) of the shaping roller device (35), and in that a programmable control device cooperating with the drive (17) for moving the holding chucks (7) is provided for the precision drive (39), said control device imparting to the shaping roller (36) a path of motion which has the periodicity of the holding chucks (7) being moved past the shaping roller device (35) and in which the shaping roller (36) is movable - with variation of the distance of a point (X) on its circumference closest to a chuck axis (AL 1-3) moving past from said chuck axis relative to the chuck axis moving past - in an arc about said chuck axis, wherein at the approach of a holding chuck (7) the shaping roller (36) is capable of moving back from the path of transport (L) of the holding chucks (7) and, as the holding chuck (7) moves away, of moving forward again towards the path of transport into the gap between two holding chucks (7).

2. Apparatus according to claim 1, characterised in that the axis of the shaping roller (36) is substantially parallel to the axis of the glass tube.

3. Apparatus according to claim 1 or 2, characterised in that the shaping roller device (35) is stationary with respect to the path of transport (2) of the holding chucks (7) and is movable in a direction (42) substantially transverse to the direction of the path of transport (L) of the holding chucks (7).

4. Apparatus according to one of the preceding claims, characterised in that the path of transport (2) of the holding chucks (7) is a circle and the tube axes (AL) define a cylinder.

5. Apparatus according to claim 4, characterised in that the holding chucks (7) are disposed on a turntable (4) which is drivable at a constant speed of rotation.

6. Apparatus according to one of the preceding claims, characterised in that the change in the distance of the point (X) on the shaping roller circumference closest to one chuck axis (AL) from said chuck axis during the relative curving motion of the shaping roller (36) about the chuck axis is achievable by a phase shift between the periodic reciprocating motion of the shaping roller and the periodic sequence of holding chucks (7) moving past.

7. Apparatus according to claim 4 or 5, characterised in that the change in the distance of the point (X) on the shaping roller circumference closest to one chuck axis (AL) from said chuck axis during the relative curving motion of the shaping roller (36) about the chuck axis is achievable by a horizontal displacement (Y) of the slide rail (42') of the shaping roller out of a radial line (R) of the circular path in the direction of the path of transport (2).

8. Apparatus according to one of the preceding claims, characterised in that only one shaping roller (36) is provided per shaping roller device (35).

9. Apparatus according to one of the preceding claims, characterised in that the shaping finger (43) cooperating with a shaping roller (36) has a smaller cross-section than the desired inner cross-section of the glass tube end (38) to be shaped and is provided with a circular arc segment (S) extending over the angle of the circumference over which the shaping roller engages with the glass tube (12), wherein the radius of the circular arc segment is equal to the radius of the desired inner cross-section.

10. Apparatus according to one of the preceding claims, characterised in that the shaping roller (36) has a diameter which is larger than the spacing between the holding chucks (7), minus the minimum workable glass tube radius and the minimum radius of aperture.

11. Apparatus according to claim 10, characterised in that the diameter of the shaping roller (36) is 30% to 100% larger than the spacing between the holding chucks (7), minus the minimum workable glass tube radius and the minimum radius of aperture.

12. Apparatus according to one of the preceding claims, characterised in that the shaping roller (36) can reciprocate on the stationary support (75) by means of a slide (41), which is displaceable by means of a servo-motor (39) via a guiding axle path control synchronously with the periodic sequence of the holding chucks (7) moving past.

13. Apparatus according to one of the preceding claims, characterised in that the shaping roller (36) acts resiliently against the glass tube end (38) to be shaped relative to the theoretical motion by resilience (68).

14. Use of the apparatus according to one of the preceding claims in a machine (1) for manufacturing small bottles or bulbs from glass, in which the holding chucks (7) rotating about their own longitudinal axes are distributed over the periphery of a carousel being driven continuously in rotation and are transportable along a circular path past bays for processing the glass tubes (12).

15. Method of shaping a small bottle from a glass tube (12), wherein the small bottle is formed from one end of the glass tube in the following stages:
transporting of a number of glass tubes (12) at equal intervals continuously along a path of transport (2),
heating of one end (38) of each glass tube,
shaping of a mouth by rolling in the heat-softened glass tube end with a shaping roller (36) against a shaping finger (43), wherein the glass tube rotates about its longitudinal axis,
separation of the glass tube section comprising the shaped mouth of the glass tube, and
shaping of a bottle bottom in the separated glass tube section,
characterised in that
the shaping roller (36) reciprocates relative to the path of transport (2) at the periodicity of the sequence of glass tubes (12) moving past,
in that, with a reduction in the distance of the point (X) on the circumference of the shaping roller (36) closest to a glass tube longitudinal axis (AL 1-3) moving past from said longitudinal axis, the shaping roller (36) is moved relative to said longitudinal axis in an arc about same, and
in that, at the same time, at the approach of a glass tube (12), the shaping roller (36) is moved back from the path of transport (2) of the glass tubes and, as the glass tube moves away, the shaping roller (36) is moved forward again towards the path of transport into the gap between the glass tube moving away and the following glass tube.

## Revendications

1. Dispositif pour le façonnage de la région d'extrémité d'un tube de verre (12) dont l'extrémité (38) est ramollie par chauffage, en particulier pour réaliser la région d'embouchure de flacons fabriqués à partir de tube de verre (12), comportant
- un certain nombre de pinces de serrage (7) destinées à recevoir des tubes de verre (12), lesquelles pinces sont disposées à distance constante les unes des autres, tournent et se déplacent d'un mouvement continu à une vitesse sélectionnée le long d'une trajectoire (L) de déplacement,
- des moyens (33, Br) disposés le long de la trajectoire de déplacement (1) pour le chauffage des extrémités (38) des tubes de verre qui dépassent des pinces de serrage (7),
- au moins un dispositif (35) de façonnage à galet dont le galet (36) de façonnage, au nombre d'au moins un, est monté tournant sur un arbre (65) et peut être appliqué contre une extrémité (38) ramollie d'un tube de verre et
- un doigt de façonnage (43) qui, pendant l'opération de façonnage, coopère en tant que contre-outil avec le dispositif de façonnage (35) et peut être introduit dans l'extrémité ouverte d'un tube de verre (12), caractérisé par le fait que le galet de façonnage (36), au nombre d'au moins un, est mobile et peut être déplacé suivant un mouvement de va-et-vient par rapport à une base (75) stationnaire du dispositif de façonnage (35) à galet au moyen d'un mécanisme d'entraînement (39) lent commandé et par le fait qu'il est prévu un dispositif programmable de commande pour le mécanisme d'entraînement (39) lent qui coopère avec le mécanisme de déplacement (17) des pinces (7) et au moyen duquel un déplacement qui correspond à la périodicité de la pince (7) de serrage déplacée devant le dispositif de façonnage à galet (35) peut être imprimé au galet de façonnage (36), déplacement lors duquel le galet de façonnage (36) se déplace suivant un arc de cercle autour de l'axe (AL 1-3) de la pince en mouvement en faisant varier la distance du point (X) de sa circonférence le plus proche de l'axe de la pince par rapport audit axe de pince, le galet de façonnage (36) s'éloignant de la trajectoire (L) de déplacement de la pince de serrage (7) lorsque ladite pince (7) se rapproche et avançant en direction de la trajectoire, dans l'espace qui sépare deux pinces de serrage (7) consécutives, lorsque la pince (7) s'éloigne .

2. Dispositif selon la revendication 1, caractérisé par le fait que l'axe du galet de façonnage (36) est sensiblement parallèle à l'axe du tube de verre.

3. Dispositif selon la revendication 1 ou la revendication 2, caractérisé par le fait que le dispositif de façonnage (35) à galet est stationnaire par rapport à la trajectoire (L) de déplacement des pinces (7) et est mobile dans une direction (42) sensiblement transversale à la direction de la trajectoire (L) de déplacement des pinces de serrage (7).

4. Dispositif selon l'une des revendications précédentes, caractérisé par le fait que la trajectoire (L) de déplacement des pinces (7) est circulaire et que les axes (AL) des tubes sont situés sur une enveloppe de cylindre.

5. Dispositif selon la revendication 4, caractérisé par le fait que les pinces (7) de serrage sont disposées sur une table (4) tournante animée d'un mouvement de rotation continu.

6. Dispositif selon l'une des revendications précédentes, caractérisé par le fait que la variation de la distance entre l'axe d'une pince (AL) et le point (X) de la circonférence du galet de façonnage le plus proche dudit axe pendant le déplacement relatif suivant un arc de cercle du galet de façonnage (36) autour dudit axe de pince est obtenue par un déphasage entre le mouvement périodique de va-et-vient du galet de façonnage et la succession périodique des pinces de serrage (7) en mouvement.

7. Dispositif selon la revendication 4 ou la revendication 5, caractérisé par le fait que la variation de la distance entre l'axe d'une pince (AL) et le point (X) de la circonférence du galet de façonnage le plus proche dudit axe pendant le déplacement relatif suivant un arc de cercle du galet de façonnage (36) autour dudit axe de pince est obtenue par un déplacement (Y) horizontal du rail de guidage (42') du galet de façonnage depuis l'un des rayons (R) de la trajectoire circulaire en direction de la trajectoire de déplacement (L).

8. Dispositif selon l'une des revendications précédentes, caractérisé par le fait qu'il est prévu un galet de façonnage (36) unique par dispositif de façonnage (35).

9. Dispositif selon l'une des revendications précédentes, caractérisé par le fait que le doigt de façonnage (43) qui coopère avec un galet (36) de façonnage présente une section transversale qui est inférieure à la section intérieure recherchée de l'extrémité (38) du tube de verre à façonner et est pourvu d'un segment (S) de cercle qui s'étend sur l'angle périphérique pendant lequel le galet de façonnage est en prise avec le tube de verre (12), le rayon du secteur de cercle étant égal au rayon de la section transversale intérieure souhaitée.

10. Dispositif selon l'une des revendications précédentes, caractérisé par le fait que le galet de façonnage (36) a un diamètre qui est supérieur à la distance séparant deux pinces de serrage (7) consécutives moins le rayon du tube de verre minimal à façonner et moins le rayon d'embouchure minimal.

11. Dispositif selon la revendication 10, caractérisé par le fait que le diamètre du galet de façonnage (36) est supérieur de 30 % à 100 % à la distance séparant deux pinces de serrage (7) consécutives moins le rayon du tube de verre minimal à façonner et moins le rayon d'embouchure minimal.

12. Dispositif selon l'une des revendications précédentes, caractérisé par le fait que le galet de façonnage (36) peut être déplacé suivant un mouvement de va-et-vient sur la base (75) stationnaire au moyen d'un chariot (41) qui est déplacé par un servo-moteur (39) par l'intermédiaire d'une commande de trajectoire d'axe directeur, en synchronisme avec la succession périodique des pinces de serrage (7) en mouvement.

13. Dispositif selon l'une des revendications précédentes, caractérisé par le fait que le galet de façonnage (36) agit de manière élastique sur l'extrémité (38) à façonner du tube de verte grâce à un montage élastique (68) par rapport au déplacement théorique.

14. Utilisation du dispositif selon l'une des revendications précédentes sur une machine (1) à fabriquer des flacons ou des ampoules, dans laquelle des pinces de serrage (7) qui tournent autour de leur axe sont disposées sur la périphérie d'un carrousel entraîné de manière continue en rotation et peuvent être déplacé suivant une trajectoire circulaire devant des postes prévus pour le façonnage des tubes de verre (12).

15. Procédé de façonnage d'un flacon à partir d'un tube de verre (12), le flacon étant façonné à partir de l'extrémité du tube de verre, procédé comprenant les étapes suivantes:
transport en continu avec un espacement constant d'un certain nombre de tube de verre (12) le long d'une trajectoire de déplacement (L), chauffage de l'une des extrémités (38) de chacun des tubes de verre, façonnage d'une embouchure par roulage de l'extrémité du tube de verre ramollie par chauffage, au moyen d'un galet de façonnage (36) agissant contre un doigt de façonnage (43), le tube de verre tournant autour de son axe longitudinal,
séparation du tronçon de tube de verre pourvu de son embouchure façonnée et
façonnage d'un fond sur le tronçon de tube de verre séparé,
caractérisé par le fait que l'on déplace suivant un mouvement de va-et-vient, avec la périodicité de la succession des tubes de verre, le galet de façonnage (36) par rapport à la trajectoire de déplacement (2),
par le fait que l'on déplace le galet de façonnage (36) en diminuant la distance entre le point de sa périphérie (X) le plus proche de l'axe longitudinal d'un tube de verre en mouvement et ledit axe en faisant tourner ledit galet suivant un arc de cercle autour de l'axe,
par le fait que lorsqu'un tube de verre (12) se rapproche on éloigne le galet de façonnage (36) de la trajectoire de déplacement (L) des tubes de verre et lorsque le tube de verre s'éloigne, on déplace le galet de façonnage en direction de la trajectoire, dans l'espace entre le tube de verre qui s'éloigne et le tube de verre suivant.
